# EUROPEAN PATENT SPECIFICATION

(11) **EP 1 856 192 B1**
(45) Date of publication and mention of the grant of the patent: **24.06.2009**
(21) Application number: 06706716.5
(22) Date of filing: 07.02.2006
(51) Int. Cl.: C08G 77/20, D06M 15/643

(54) **ACRYLATO-FUNCTIONAL POLYSILOXANES**
ACRYLATOFUNKTIONELLE POLYSILOXANE
POLYSILOXANES DE GROUPEMENTS ACRYLATOYLES

(30) Priority: 09.02.2005 EP 05002627
(43) Date of publication of application: 21.11.2007
(73) Proprietor: Huntsman Textile Effects (Germany) GmbH, 86462 Langweid (DE)
(72) Inventor: CHROBACZEK, Harald, 86153 Augsburg (DE); NIEDERSTADT, Rule, 86157 Augsburg (DE); ELLMANN, Jürgen, 86163 Augsburg (DE); TSCHIDA, Günther, 86830 Schwabmünchen (DE)
(86) International application number: PCT/EP2006/001072
(87) International publication number: WO 2006/084665

(56) References cited:
- EP-A- 0 182 941
- DE-A1- 10 219 734
- GB-A- 1 323 869
- US-A- 4 290 869

## Description

The present invention relates to compositions which comprise acrylato-functional polysiloxanes and which can be prepared by a specific process. It further relates to the use of such compositions.

Polysiloxanes containing acrylato groups are known from, for example, DE-A 102 19 734, EP-A 564 253, US-A 4 528 081, and EP-A 373 659.
From the literature cited above it is also apparent that it is known to cure silicon compounds containing acrylate units by means of free-radical polymerization. This free-radical polymerization can take place for example by means of UV irradiation.
The acrylato-functional polyorganosiloxanes known from the above-cited prior art contain either only products with units 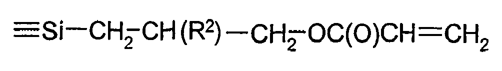 or the corresponding methacrylate units. In these units R² is hydrogen or CH₃. These units 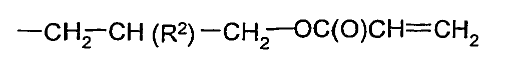 and 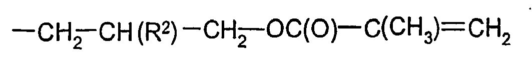 are referred to below as "γ units".
Or else the known polysiloxanes contain only products having units 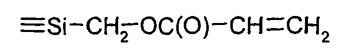 of the corresponding methacrylate units.
The units 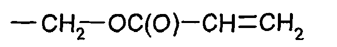 and the corresponding methacrylate units are referred to below as "α units".
Acrylato-functional polysiloxanes containing only α units but no γ units attached to silicon possess the disadvantage that they normally have high viscosities, form hard films after polymerization, and are therefore unsuitable for numerous applications.
Acrylato-functional polysiloxanes which contain only γ units but no α units attached to the silicon possess the disadvantage that, after curing/polymerization, films are obtained which are more or less tacky and hence unsuitable for a range of end uses.
Attempts to mix acrylato-functional polysiloxanes containing exclusively α units with acrylato-functional polysiloxanes containing exclusively γ units have the disadvantage that they are inconvenient and expensive, necessitating the preparation of the two different polysiloxanes in two separate processes.

The object on which the present invention is based is to provide compositions which comprise acrylato-functional polyorganosiloxanes and which do not have the above-outlined disadvantages of known acrylato-functional polyorganosiloxanes.

This object has been achieved by means of a composition which can be prepared by reacting a hydroxyl-containing polyorganosiloxane whose chain ends are formed by groups of the formula (I)

(R⁸)(R)₂Si-O- (I)

and which within the siloxane chain contains units of the formula (II)

-Si(R¹)(R⁹)-O- (II),

or a mixture of such polyorganosiloxanes,
with a mixture of silanes of the formula (III) and of the formula (IV) 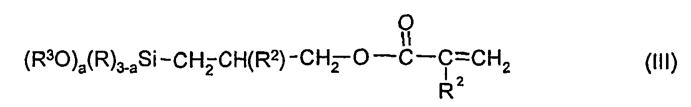 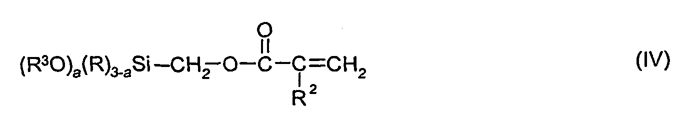 where a is 1, 2 or 3, preferably 2,
in which
all radicals R present are independently of one another an alkyl radical having 1 to 4 carbon atoms, or the unsubstituted phenyl radical,
all radicals R¹ present are independently of one another R or a radical of the formula (V), 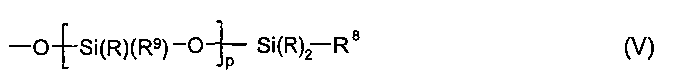 all radicals R³ present are independently of one another an alkyl radical having 1 to 4 carbon atoms, all radicals R⁸ present are independently of one another R or a hydroxyl group,
p is number from 3 to 25,
all radicals R⁹ present are independently of one another R or an OH group,
at least two of the radicals R⁸ present being OH,
and all radicals R² present being independently of one another H or CH₃,
and if desired, after the reaction, further reacting OH groups still present with a monohydric linear or branched alcohol having 1 to 16 carbon atoms.

The stated hydroxyl-containing polyorganosiloxanes, referred to below as "α,ω-dihydroxypolyorganosiloxanes", are reacted, then, with a mixture of silanes of which one (formula IV) contains α units and the other (formula III) contains γ units. This reaction is carried out, as elucidated in greater detail below, such that either there is an equilibration, in which structural units of the two silanes are incorporated into the chain of the α,ω-dihydroxypolyorganosiloxane, or else - and this is preferred - the reaction is carried out such that condensation reactions take place between terminal OH groups of the polysiloxane and the two silanes. One of the reasons why the second version, the condensation, is preferred is because it can be carried under more gentle conditions, i.e. at a lower temperature, than the equilibration reaction. The stated reactions produce polyorganosiloxanes which contain both α units and γ units in the same molecule. They are superior to polysiloxanes containing only α or only γ units and they are less expensive to prepare than mixtures of these two prior-art polysiloxanes.

The reaction of the dihydroxypolyorganosiloxanes with the mixture of silanes of the formula (III) and of the formula (IV) produces mixtures of products. The nature and the relative proportion of the individual components of the mixture produced, i.e., of the composition of the invention, depend on the nature and amount of the starting compounds and on the reaction conditions.

There are in principle 2 considerable kinds of reaction mechanism: a reaction regime which leads to equilibration reactions or a reaction regime which leads to condensation reactions. It is preferred to conduct the reaction in such a way that only condensation, and no equilibration, takes place. The condensation proceeds at lower temperatures and is therefore more favorable on a cost basis. In the condensation, OR³ groups of the silanes of the formula (III) and of the formula (IV) react with terminal OH groups of the α,ω-dihydroxypolysiloxane with elimination of alcohol R³OH and chain extension. Polyorganosiloxanes are formed which contain both α units and γ units in the same molecule.
The reaction can be conducted as a condensation at a temperature in the range from 80 to 105°C for 3 to 4 hours, preferably under reduced pressure; for example, at a pressure in the region of 100 mbar. Details concerning condensation reactions are known from silicone chemistry. For condensation to be able to take place at all it is necessary for the polysiloxane used to have hydroxyl groups on at least two chain ends.

Equilibration reactions are likewise well known from the literature on silicone chemistry. In the case of equilibration, silane units are inserted into the polysiloxane chain. The equilibration therefore requires the cleaving of Si-O-Si bonds in the chain. This explains the higher temperatures needed for equilibration than for condensation. The reaction in which compositions of the invention are produced is conducted, when equilibration is desired, at a temperature in the range from 110 to 135°C for a time of 3 to 4 hours. The equilibration reaction is carried out preferably in the presence of water, in order to hydrolyze OR³ groups to OH groups. The equilibration as well produces polysiloxanes containing both α and γ units in the same molecule.

The reaction which leads to compositions of the invention is preferably carried out with the use of a catalyst or catalyst mixture, either when carried out in the form of a condensation or when carried out in the form of an equilibration.
Suitable catalysts are known from the silicone literature. In certain cases it is possible to employ acidic catalysts, examples being Lewis acids or dilute mineral acids; normally, however, basic catalysts are more suitable and therefore preferred. Highly suitable basic catalysts are alkali metal hydroxides such as NaOH, KOH or LiOH and, in particular, metal alkoxides. Among the metal alkoxides particularly good suitability is possessed by alkali metal alkoxides of the formula M(OR³). These metal alkoxides can be used for example as a 20% to 30% strength solution in the parent alcohol R³-OH. In the preceding formula M is Na or K and R³ is an alkyl radical having 1 to 4 carbon atoms.
Further suitable catalysts are 4-dimethylaminopyridine and bicyclic compounds containing one or more nitrogen atoms as ring members. Examples are 1,5-diazabicyclo[2.2.2.]octane, 1,5-diazabicyclo[4.3.0]non-5-ene, and 1,8-diazabicyclo[5.4.0]undec-7-ene.

Particularly good results are obtained if the reaction leading to compositions of the invention is carried out such that per mole of OH groups of the α,ω-dihydroxypolyorganosiloxane 0.01 to 0.6 mol of silanes of the formula (III) and of the formula (IV) is used.
The stated range from 0.01 to 0.6 refers in this case to the sum of all silanes of the formula (III) and of the formula (IV) that are used. Where further silanes are used additionally, i.e., silanes not covered by formula (III) or formula (IV), the above-mentioned range from 0.1 to 0.6 nevertheless relates only to the ratio of α,ω-dihydroxypolyorganosiloxane to the sum of the silanes of the formula (III) and (IV); in other words, silanes used additionally are not counted into said ratio.

For the performance properties of the compositions of the invention it is of advantage in many cases if the silanes of the formula (III) are used in higher molar amounts than the silanes of the formula (IV). In one preferred embodiment of compositions of the invention, in the reaction, a mixture of silanes of the formula (III) and of the formula (IV) is used that contains 2 to 20, preferably 5 to 14, mols of silane of the formula (III) per mole of silane of the formula (IV).

The α,ω-dihydroxypolyorganosiloxanes used must have groups of the formula (I)

HO(R)₂Si-O- (I)

at least at two chain ends. R in this formula is as defined above. The hydroxyl groups are necessary, as described above, to enable condensation reactions to proceed between these polysiloxanes and the mixture of silanes. The radicals R in the formula (I) are independently of one another an alkyl radical having 1 to 4 carbon atoms, or the unsubstituted phenyl radical. Highly suitable radicals R are methyl groups.
The α,ω-dihydroxypolyorganosiloxanes used have units of the formula (II)

-Si(R¹)(R⁹)-O- (II)

within the polysiloxane chain. All radicals R⁹ are independently of one another R or OH. All radicals R¹ are independently of one another R or a radical of the formula (V) 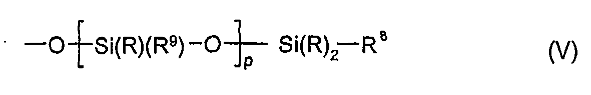 All radicals R⁸ present are independently of one another R or OH;
p has a number from 3 to 25.

The α,ω-dihydroxypolyorganosiloxanes used for the reaction with silanes can be α,ω-dihydroxypolydimethylsiloxanes in which apart from two or more terminal hydroxyl groups only methyl groups are attached to the silicon atoms. They may alternatively be polysiloxanes which contain further functional groups, in particular further groups present in side chains of the polysiloxanes. Thus, for example, polysiloxanes additionally containing amino groups are highly suitable for use. Preference is given here to α,ω-dihydroxypolyorganosiloxanes which apart from units of the formulae (I) and (II) within the siloxane chain additionally contain one or more units of the formula (VI)

-Si(R⁹)(Z)-O- (VI)

in which all radicals Z present are independently of one another a radical of the formula (VII) or of the formula (VIII) 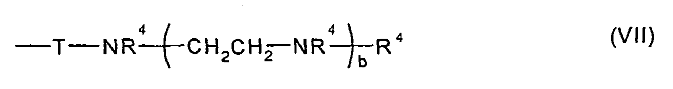 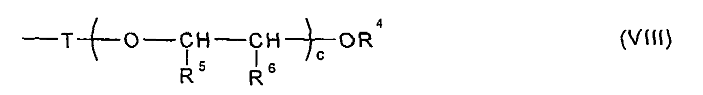 in which T is a linear or branched alkylene radical having 1 to 4 carbon atoms,
b is 0, 1 or 2,
c is a number from 1 to 20,
all radicals R⁴ independently of one another are H or R, and
in each unit of the formula (VIII) one of the radicals R⁵ and R⁶ is H and the other is H or CH₃.

Additionally suitable are polysiloxanes in which there are modified side chains, i.e., chemically altered side chains, of the formula (VII). In this case the chemical modification involves one of the following reactions having been carried out on one or more of the nitrogen atoms:
a) quaternization with alkylating agents, so that the nitrogen atom in question is attached to 4 carbon atoms and is therefore in a positively charged form.
b) Reaction with γ-butyrolactone with ring opening, producing an amide of ω-hydroxybutyric acid
c) Acylation by means of carboxylic anhydride, in particular by means of acetic anhydride.
d) Addition reaction of acrylamide.

α,ω-Dihydroxypolyorganosiloxanes suitable for preparing compositions of the invention, including those siloxanes with side chains that contain amino groups, are commercially customary polymers that are available on the market. They can be procured from companies including Wacker Chemie, DE, and Dow Coming.

In the case of the silanes of the formula (III) and of the formula (IV) 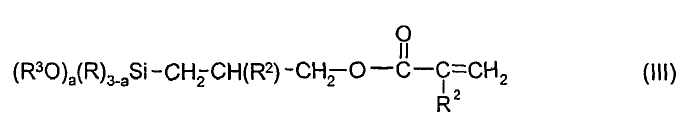 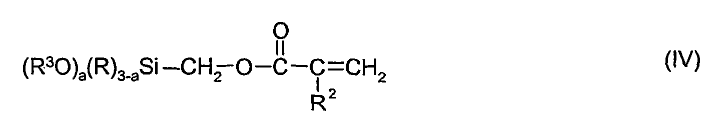 preference is given to those in which a is 2. However, it is also possible for a to adopt a value of 1 or 3. All radicals R independently of one another are an alkyl radical having 1 to 4 carbon atoms, or the unsubstituted phenyl radical All radicals R³ independently of one another are an alkyl radical having 1 to 4 carbon atoms, in particular the methyl or ethyl radical. All radicals R² present are independently of one another hydrogen or the methyl radical - in other words, it is possible to use not only silanes with acrylate units but also those with methacrylate units, or mixtures of acrylatosilanes and methacrylatosilanes.

Silanes of the formula (III) and of the formula (IV) are available on the market, from for example Wacker Chemie GmbH, DE (GENIOSIL XL 32) or ABCR GmbH & Co., Karlsruhe, DE.
Silanes of the formula (IV) can be prepared in accordance with the teaching of the abovementioned DE-A 102 19 734. One preparation possibility involves reacting acrylic or methacrylic acid with

(R³O)ₐ(R)₃₋ₐSi CH₂ Cl

and a basic catalysis.
Silanes of the formula (III) can be obtained by addition reaction of

(R³O)ₐ(R)₃₋ₐSi H

with allyl alcohol or methallyl alcohol and subsequent esterification or transesterification with (meth)acrylic acid or esters thereof.

Besides the silanes of the formula (III) and of the formula (IV), which are always involved in the reaction with α,ω-dihydroxypolyorganosiloxane, it is additionally possible to use further silanes. An example thereof are silanes of the formula (X) 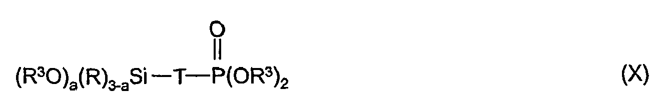 in particular of the formula 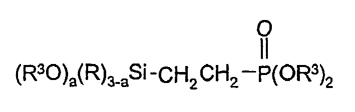 in which R³, R, and a are as defined above. T here is a linear or branched divalent alkylene radical having 1 to 4 carbon atoms. Silanes of this kind can be prepared by catalytic addition reaction of dialkyl phosphite with vinylsilanes of the formula

(R³O)ₐ(R)₃₋ₐSi CH=CH₂.

This is described in DE-A 22 19 983.

Especially suitable for addition use alongside silanes of the formula (III) and of the formula (IV) are silanes containing one or more amino groups. One preferred embodiment of compositions of the invention is therefore **characterized in that** in addition to the silanes of the formula (III) and of the formula (IV) for the reaction of α,ω-dihydroxypolyorganosiloxane one or more silanes are used which are selected from silanes of the formula (IX), of the formula (X) and of the formula (XI) 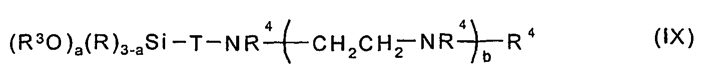 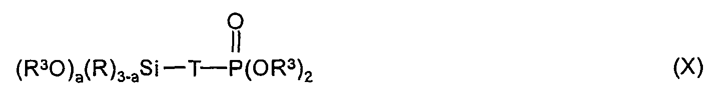 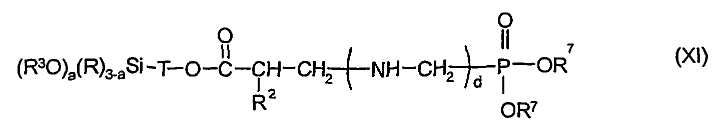 in which the radicals R⁷ present are independently of one another-CH₃ or -CH₂-CH₃ and d is 0 or 1,
R, R², R³, R⁴, T, a and b being as defined in claim 1 or 2.
The nitrogen-containing silanes of the formulae (IX) and (XI) may also be present here in a modified form, in which one or more of the nitrogen atoms have been chemically reacted, as described above in connection with formula (VII) - that is, by reaction with butyrolactone, addition reaction with acrylamide, acylation or quaternization. Such modification/reaction may also be carried out, however, after the silane mixture has been reacted with the α,ω-dihydroxypolysiloxane.

After the reaction of the dihydroxypolysiloxanes with the mixture of the silanes it is possible for hydroxyl groups which may still be present in the resultant composition to be blocked by reaction with a monohydric alcohol, i.e., etherified. The monohydric alcohols used for this purpose are aliphatic, branched or unbranched alcohols having 1 to 16 carbon atoms. Use may then be made of this blocking/removal of free OH groups when it is necessary to tailor the viscosity of compositions of the invention that still contain free hydroxyl groups.

Compositions of the invention can if desired be reacted with further compounds in order to obtain a certain preliminary crosslinking, the reaction taking place in proportions which ensure that the compositions of the invention still contain reactive acrylate groups. Examples of compounds highly suitable for this purpose are the amino-, epoxy- or isocyanato-functional silanes familiar to the skilled worker, or compounds having two or more acrylate groups.

Compositions of the invention may if desired be dispersed in water. Dispersants suitable for this purpose are known to the skilled worker from the literature on silicones. They include nonionic surfactants such as fatty alcohol ethoxylates or cationic surfactants such as quaternary ammonium salts. Aqueous dispersions of compositions of the invention can be used to finish paper, among other applications.
One preferred use of compositions of the invention is in the treatment of fiber materials with these compositions. This can be done as part of known textile finishing or textile treatment processes; for example, by applying aqueous dispersions of compositions of the invention to sheetlike textile structures made of fiber materials, by a padding method. The aqueous dispersions used for this purpose may further comprise additional products of the kind customary for textile treatment, examples being oil and water repellency products, waxes as soft hand agents, and flame retardants. The fiber materials are preferably sheetlike textile structures in the form of wovens, knits or nonwovens. They may be composed, among other materials, of natural polymers such as cellulose or of synthetic polymers such as polyesters, polyacrylonitrile or polyamides.

Compositions of the invention can be used with particular advantage for the curtain coating of fiber materials in the form of wovens. This curtain coating can be carried out by methods which are general knowledge. A thin layer of a liquid composition of the invention, which is guided vertically, is applied to a sheetlike textile structure, which is moving horizontally. This is followed by drying and by condensation/curing at elevated temperature, in the course of which carbon-carbon double bonds are polymerized. Curtain coating requires the viscosities of the liquid coating agents to be situated within a defined range. In order to obtain liquid compositions of the invention in a defined viscosity range it may be necessary to add products of low viscosity, examples being organic solvents or low-viscosity liquid acrylate monomers or oligomers.
For curtain coating, compositions of the invention are used normally not in the form of aqueous dispersions, but instead without additives or with the aforementioned additives for controlling the viscosity.
For curtain coating it is also possible for the abovementioned fiber materials comprising natural or synthetic polymers to come into consideration. Of particular suitability for this purpose are wovens made of polyamide. With these wovens it is possible to produce coated fabrics for use as airbags for motor vehicles.
Before curtain coating is carried out, the wovens may be subjected to a known plasma pretreatment.

As mentioned above, after the composition of the invention has been applied the treated sheetlike textile structure is required to pass through a condensation stage. By means of this condensation stage, the carbon-carbon double bonds present in the composition are polymerized, at least to a substantial extent. The condensation/polymerization may be brought about by means of UV irradiation. If UV irradiation is employed, one or more photoinitiators are added to the composition of the invention. The products which can be used as photoinitiators are known. They include products of the series IRGACURE^{®}, e.g., IRGACURE^{®} 184 and 819 (Ciba Spezialitätenchemie AG, Basle, CH). Further suitable products are described by US-B1 6 211 308 (column 10). Monochromatic light sources are highly suitable for the irradiation, particularly lasers.
The condensation/curing which is carried out following the application of compositions of the invention to sheetlike textile structures may also take place by means of electron beams instead of by UV irradiation. In this case no photoinitiator is necessary.
Condensation/curing may follow an application by curtain coating, in a continuous process. Suitable parameters for implementing curtain coating and for continuous subsequent curing are found in EP-A 1 498 533.

The invention will now be illustrated by means of working examples.

### Example 1 (inventive)

95 g of a mixture of two different commercial liquid α,ω-dihydroxypolydimethylsiloxanes (the difference between two siloxanes related to the chain length),
5 g of 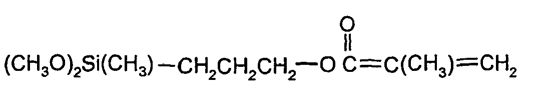 (= "γ-silane") of the formula (III),
0.5 g of 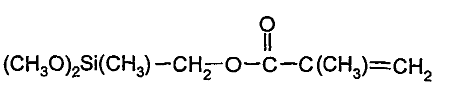 (= "α-silane") of the formula (IV),
   and
0.2 g of a 30% strength solution of NaOCH₃ in methanol were mixed.
The γ-silane:α-silane molar ratio was approximately 9:1. The mixture was heated to 90°C under an N₂ atmosphere and with stirring, and was held at this temperature for 5 minutes. The pressure was then lowered slowly (foaming!) to 100 mbar and methanol was distilled off at 90°C. After about 1.5 hours only a small amount of methanol was still going over. A sample of the liquid formed up to that point possessed a viscosity of approximately 300 mPa.s at room temperature.
A further 0.08 g of the NaOCH₃ solution was then added to the liquid formed, and distillative removal of methanol was continued at 90°C under reduced pressure for a further 30 minutes. A sample of the solution then had a viscosity of about 700 mPa.s at room temperature. A further 0.05 g of the catalyst solution (NaOCH₃ solution) was added and distillation was carried out again at 90°C under reduced pressure for 30 minutes. This gave a solution having a viscosity of about 1200 mPa.s at 20°C (= "solution 1 "). This solution was highly suitable for the curtain coating of woven fabrics.

### Example 2 (inventive)

Example 1 was repeated with the following differences:
The γ-silane:α-silane molar ratio was approximately 1.5:1.
3.2 g of γ-silane (the same silane as in Example 1)
   and
1.9 g of α-silane (the same silane as in Example 1)
were used.
The solution obtained at the end of the synthesis (= "solution 2") had a viscosity of about 6000 mPa.s at 20°C. It is not quite as suitable for curtain coating as solution 1.

### Example 3 (inventive)

In this example an α,ω-dihydroxypolysiloxane was reacted not only with a mixture of a silane containing α units (formula IV) and a silane containing γ units (formula (III)). Instead a mixture of 4 silanes was used: a silane containing α units, a silane containing γ units, an amino-functional silane, and a silane containing a phosphono group. The polyorganosiloxane produced in the reaction can be used for the flame retardancy treatment of textiles, owing to the presence of nitrogen atoms and phosphorus atoms.
88 g of the mixture of two dihydroxypolyorganosiloxanes, as specified in Example 1, were mixed with
4.8 g of the γ-silane specified in Example 1,
0.48 g of the α-silane from Example 1,
2.2 g of (CH₃O)₂Si(CH₃)CH₂CH₂CH₂-NH-CH₂CH₂-NH₂ ,
3.5 g of (C₂H₅O)₂P(O)-CH₂CH₂-Si(OC₂H₅)₃,
   and
0.2 g of a 30% strength solution of NaOCH₃ in methanol.

The mixture was processed as reported in Example 1.
This gave a liquid composition (= "solution 3") having a viscosity of about 1000 mPa.s at 20°C. This composition was highly suitable for the curtain coating of woven fabrics.

### Example 4 (noninventive, comparative example)

In this example the mixture of two α,ω-dihydroxypolysiloxanes (see Example 1) was reacted only with a silane containing α units (formula IV). A silane containing γ units (formula (III)) was not involved in the reaction.
95 g of the mixture of two dihydroxypolysiloxanes specified in Example 1,
4.7 g of the silane containing α units, specified in Example 1,
   and
0.2 g of the abovementioned NaOCH₃ solution were mixed and subjected to further processing as reported in Example 1.
This gave a solution (= "solution 4") having a viscosity of about 12 000 mPa.s at 20°C. This solution possesses a viscosity which is unacceptably high for curtain coating.

### Example 5 (noninventive, comparative example)

In this example the mixture of two α,ω-dihydroxypolysiloxanes was reacted only with a silane containing γ units (formula III). A silane containing α units (formula IV) was not used.
84 g of the mixture of two α,ω-dihydroxypolysiloxanes specified in Example 1,
5.4 g of the γ-silane specified in Example 1,
   and
0.2 g of the abovementioned NaOCH₃ in methanol solution were mixed and subjected to further processing as reported in Example 1. This gave a solution (= "solution 5") having a viscosity of about 850 mPa.s at 20°C.

### Example 6

This example relates to a mixture of a first polysiloxane, in which α units are attached to Si atoms, but not γ units, and a second polysiloxane, in which γ units are attached to Si atoms, but not α units. This mixture was prepared by mixing 90 parts by weight of solution 5 (see Example 5) and 10 parts by weight of solution 4 (see Example 4). This gave a solution (= "solution 6") having a viscosity of about 2400 mPa.s at 20°C.
The solution obtained therefore contains both α units and γ units, but not in the same molecule. The effort and cost involved in its preparation is higher than that for the preparation of compositions of the invention, because two different polysiloxanes must be prepared separately from one another. In the preparation of compositions of the invention, in contrast, only one polysiloxane synthesis has to be carried out.

### Example 7

Each of solutions 1 to 6 was admixed with 2% by weight of a photoinitiator (DAROCURE^{®} 1173 from Ciba Spezialitätenchemie, Basle, CH), and initiator based on an aromatic hydroxy ketone. The compositions obtained (= "compositions 1 to 6") were used to coat woven fabric, with an add-on of 15 to 20 g/m², and the coatings were cured by UV irradiation (wavelength range 200-400 nm, power approximately 120 W/cm). It was found that only compositions 1, 2 and 3 from Examples 1, 2 and 3 gave appropriate films on the fabric. The film of Example 4 was very hard, a consequence of the high viscosity of solution 4. The film of Example 5 was too soft, tacky, and greasy. The film of Example 6, although better than the films of compositions 4 and 5, was nevertheless brittle and therefore less suitable as a coating than the films resulting from Examples 1 to 3.

The films obtained after polymerization of composition 6 were definitely poorer than those obtained after polymerization of composition 1, despite the fact that in both cases the molar ratio of γ to α units was approximately 9:1. The difference in the properties of composition 1 as compared with composition 6, therefore, can be explained by the fact that in composition 1 the α units and the γ units were present in the same molecule, while in composition 6 there was an intermolecular mixture of a silicone containing α units and a silicone containing γ units.

## Claims

1. A composition preparable by reacting a hydroxyl-containing polyorganosiloxane whose chain ends are formed by groups of the formula (I)
(R⁸)(R)₂Si-O- (I)
and which within the siloxane chain contains units of the formula (II)
-Si(R¹)(R⁹)-O- (II),
or a mixture of such polyorganosiloxanes,
with a mixture of silanes of the formula (III) and of the formula (IV) 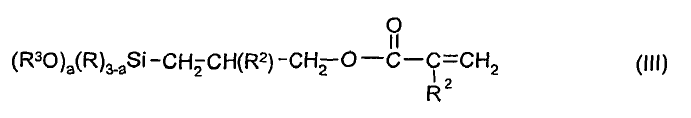 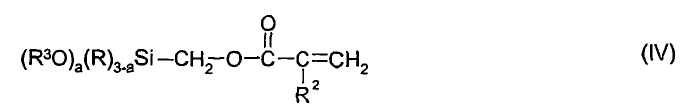 where a is 1, 2 or 3, preferably 2,
in which
all radicals R present are independently of one another an alkyl radical having 1 to 4 carbon atoms, or the unsubstituted phenyl radical,
all radicals R¹ present are independently of one another R or a radical of the formula (V), 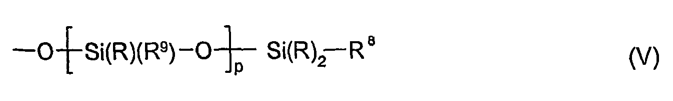 all radicals R³ present are independently of one another an alkyl radical having 1 to 4 carbon atoms,
all radicals R⁸ present are independently of one another R or a hydroxyl group,
p is number from 3 to 25,
all radicals R⁹ present are independently of one another R or an OH group,
at least two of the radicals R⁸ present being OH,
and all radicals R² present being independently of one another H or CH₃,
and if desired, after the reaction, further reacting OH groups still present with a monohydric linear or branched alcohol having 1 to 16 carbon atoms.

2. The composition of claim 1, **characterized in that** the hydroxyl-containing polyorganosiloxane further comprises within the siloxane chain one or more units of the formula (VI)
-Si(R⁹)(Z)-O- (VI)
in which all radicals Z present are independently of one another a radical of the formula (VII) or of the formula (VIII) 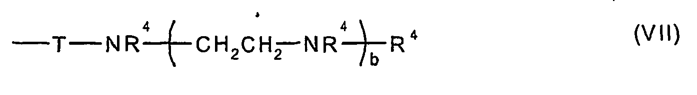 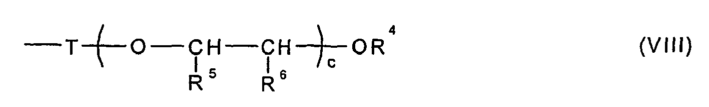 in which T is a linear or branched alkylene radical having 1 to 4 carbon atoms,
b is 0, 1 or 2,
c is a number from 1 to 20,
all radicals R⁴ independently of one another are H or R, and
in each unit of the formula (VIII) one of the radicals R⁵ and R⁶ is H and the other is H or CH₃.

3. The composition of claim 1 or 2, **characterized in that** in addition to the silanes of the formula (III) and of the formula (IV) for the reaction with hydroxyl-containing polyorganosiloxane one or more silanes are used which are selected from silanes of the formula (IX), of the formula (X) and of the formula (XI) 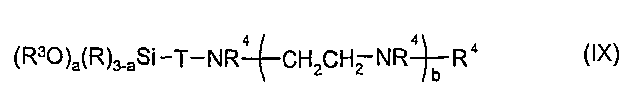 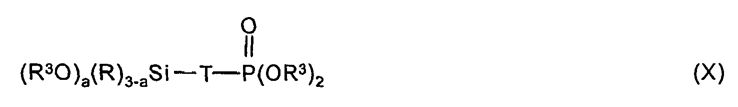 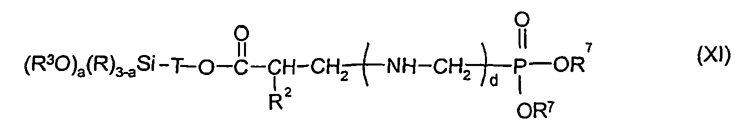 in which the radicals R⁷ present are independently of one another -CH₃ or -CH₂-CH₃ and d is 0 or 1,
R, R², R³, R⁴, T, a and b being as defined in claim 1 or 2.

4. The composition of one or more of claims 1 to 3, **characterized in that** the reaction is carried out in the presence of a catalyst.

5. The composition of claim 4, **characterized in that** a basic catalyst is used.

6. The composition of claim 4 or 5, **characterized in that** the catalyst is a metal alkoxide, preferably of the formula (XI)
M(OR³) (XI)
in which M is Na or K
and R³ is as defined in claim 1.

7. The composition of one or more of claims 1 to 6, **characterized in that** per mole of OH groups of the hydroxyl-containing polyorganosiloxane 0.01 to 0.6 mol of silanes of the formula (III) and of the formula (IV) is used.

8. The composition of one or more of claims 1 to 7, **characterized in that** for the reaction a mixture of silanes of the formula (III) and of the formula (IV) is used that contains 2 to 20, preferably 5 to 14, mols of silane of the formula (III) per mole of silane of the formula (IV).

9. The use of a composition of one or more of claims 1 to 8 for treating fiber materials.

10. The use of claim 9, **characterized in that** the fiber material treatment is carried out in the form of a curtain coating process.

11. The use of claim 10, **characterized in that** after the curtain coating a cure by means of UV radiation or electron beams is carried out.

12. The use of one or more of claims 9 to 11, **characterized in that** the fiber materials are sheetlike textiles in the form of wovens, knits or nonwovens.

13. The use of one or more of claims 9 to 12, **characterized in that** the fiber materials are composed of polyamide.

## Patentansprüche

1. Zusammensetzung, herstellbar durch Umsetzung eines Hydroxygruppen enthaltenden Polyorganosiloxans, dessen Kettenenden durch Gruppen der Formel (I)
(R⁸)(R)₂Si-O- (I)
gebildet werden und das innerhalb der Siloxankette Einheiten der Formel (II) aufweist
-Si(R¹)(R⁹)-O- (II)
oder eines Gemischs solcher Polyorganosiloxane
mit einem Gemisch aus Silanen der Formel (III) und der Formel (IV) 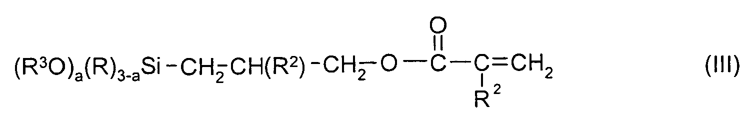 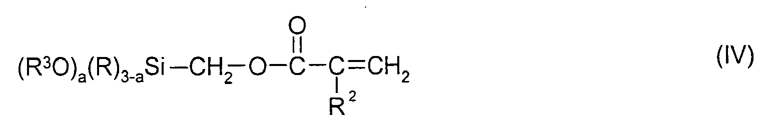 wobei a den Wert 1, 2 oder 3 besitzt, vorzugsweise den Wert 2,
worin
alle anwesenden Reste R unabhängig voneinander für einen Alkylrest mit 1 bis 4 Kohlenstoffatomen oder für den unsubstituierten Phenylrest stehen,
alle anwesenden Reste R¹ unabhängig voneinander für R oder für einen Rest der Formel (V) stehen, 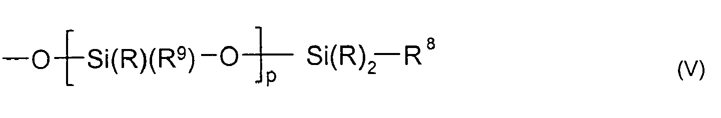 alle anwesenden Reste R³ unabhängig voneinander für einen Alkylrest mit 1 bis 4 Kohlenstoffatomen stehen,
alle anwesenden Reste R⁸ unabhängig voneinander für R oder eine Hydroxygruppe stehen,
p für eine Zahl von 3 bis 25 steht,
alle anwesenden Reste R⁹ unabhängig voneinander für R oder eine OH-Gruppe stehen,
wobei mindestens zwei der anwesenden Reste R⁸ für OH stehen
und wobei alle anwesenden Reste R² unabhängig voneinander für H oder CH₃ stehen,
wobei gegebenenfalls nach der Umsetzung noch anwesende OH-Gruppen mit einem einwertigen linearen oder verzweigten Alkohol mit 1 bis 16 Kohlenstoffatomen weiter umgesetzt werden.

2. Zusammensetzung nach Anspruch 1, **dadurch gekennzeichnet, dass** das Hydroxygruppen enthaltende Polyorganosiloxan innerhalb der Siloxankette zusätzlich eine oder mehrere Einheiten der Formel (VI)
-Si(R⁹)(Z)-O- (VI)
enthält, worin alle anwesenden Reste Z unabhängig voneinander für einen Rest der Formel (VII) oder der Formel (VIII) stehen 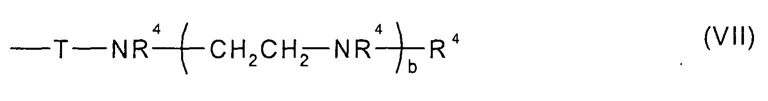 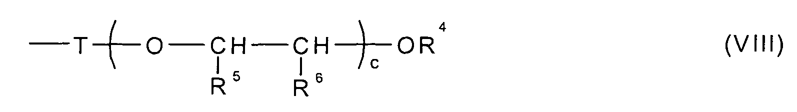 worin T für einen linearen oder verzweigten Alkylenrest mit 1 bis 4 Kohlenstoffatomen steht,
worin
b den Wert 0, 1 oder 2 besitzt,
c eine Zahl von 1 bis 20 ist,
alle Reste R⁴ unabhängig voneinander für H oder R stehen,
in jeder Einheit der Formel (VIII) einer der Reste R⁵ und R⁶ für H und der andere für H oder CH₃ steht.

3. Zusammensetzung nach Anspruch 1 oder 2, **dadurch gekennzeichnet, dass** zusätzlich zu den Silanen der Formel (III) und der Formel (IV) für die Umsetzung mit Hydroxygruppen enthaltendem Polyorganosiloxan ein oder mehrere Silane verwendet werden, die aus Silanen der Formel (IX), der Formel (X) und der Formel (XI) ausgewählt sind 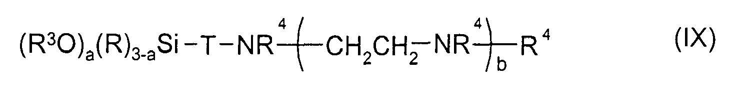 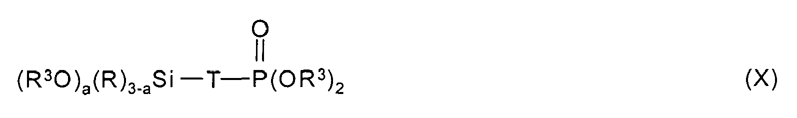 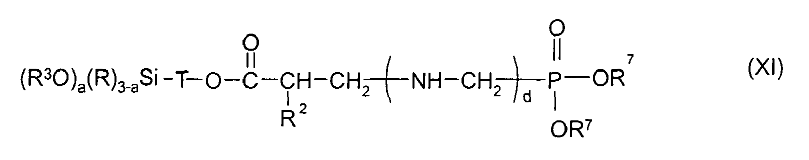 worin die anwesenden Reste R⁷ unabhängig voneinander für -CH₃ oder für -CH₂-CH₃ stehen und d den Wert 0 oder 1 besitzt,
wobei R, R², R³, R⁴, T, a und b die in Anspruch 1 bzw. 2 genannten Bedeutungen besitzen.

4. Zusammensetzung nach einem oder mehreren der Ansprüche 1 bis 3, **dadurch gekennzeichnet, dass** die Umsetzung in Gegenwart eines Katalysators durchgeführt wird.

5. Zusammensetzung nach Anspruch 4, **dadurch gekennzeichnet, dass** ein basischer Katalysator verwendet wird.

6. Zusammensetzung nach Anspruch 4 oder 5, **dadurch gekennzeichnet, dass** der Katalysator ein Metallalkoholat, vorzugsweise der Formel (XI), ist
M(OR³) (XI)
worin M für Na oder K steht,
und R³ die in Anspruch 1 genannte Bedeutung besitzt.

7. Zusammensetzung nach einem oder mehreren der Ansprüche 1 bis 6, **dadurch gekennzeichnet, dass** pro Mol OH-Gruppen des Hydroxygruppen enthaltenden Polyorganosiloxans 0,01 bis 0,6 Mol an Silanen der Formel (III) und der Formel (IV) eingesetzt werden.

8. Zusammensetzung nach einem oder mehreren der Ansprüche 1 bis 7, **dadurch gekennzeichnet, dass** bei der Umsetzung ein Gemisch von Silanen der Formel (III) und der Formel (IV) eingesetzt wird, das 2 bis 20, vorzugsweise 5 bis 14, Mole an Silan der Formel (III) pro Mol an Silan der Formel (IV) enthält.

9. Verwendung einer Zusammensetzung gemäß einem oder mehreren der Ansprüche 1 bis 8 zur Behandlung von Fasermaterialien.

10. Verwendung nach Anspruch 9, **dadurch gekennzeichnet, dass** die Behandlung der Fasermaterialien in Form eines Vorhangbeschichtungsprozesses durchgeführt wird.

11. Verwendung nach Anspruch 10, **dadurch gekennzeichnet, dass** anschließend an die Vorhangbeschichtung eine Härtung mittels UV-Strahlung oder mittels Elektronenstrahlung durchgeführt wird.

12. Verwendung nach einem oder mehreren der Ansprüche 9 bis 11, **dadurch gekennzeichnet, dass** die Fasermaterialien textile Flächengebilde in Form von Geweben, Maschenware oder Vliesen (non-wovens) sind.

13. Verwendung nach einem oder mehreren der Ansprüche 9 bis 12, **dadurch gekennzeichnet, dass** die Fasermaterialien aus Polyamid bestehen.

## Revendications

1. Composition pouvant être préparée en faisant réagir un polyorganosiloxane à teneur en hydroxyle dont les extrémités de chaîne sont formées par des groupes de la formule (I) :
(R⁸)(R)₂Si-O- (I)
et qui, à l'intérieur de la chaîne siloxane, contient des unités de la formule (II) :
-Si(R¹)(R⁹)-O- (II),
ou un mélange de tels polyorganosiloxanes,
avec un mélange de silanes de la formule (III) et de la formule (IV) : 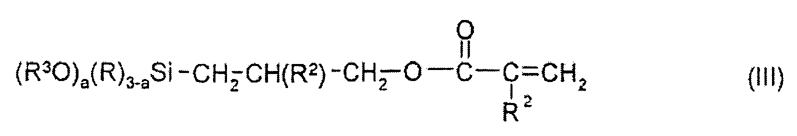 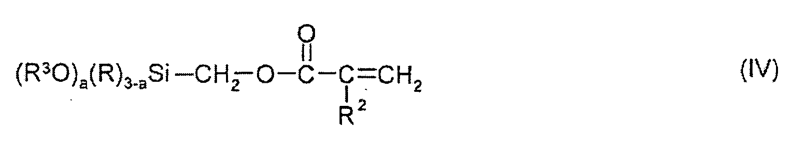 où a est 1, 2 ou 3, de préférence 2,
- tous les radicaux R présents étant, indépendamment l'un de l'autre, un radical alkyle ayant 1 à 4 atomes de carbone, ou le radical phényle non substitué ;
- tous les radicaux R¹ présents étant, indépendamment l'un de l'autre, R ou un radical de la formule (V) : 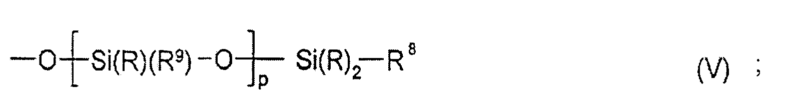
- tous les radicaux R³ présents étant, indépendamment l'un de l'autre, un radical alkyle ayant 1 à 4 atomes de carbone ;
- tous les radicaux R⁸ présents étant, indépendamment l'un de l'autre, R ou un groupe hydroxyle ;
- p est un nombre de 3 à 25 ;
- tous les radicaux R⁹ présents étant, indépendamment l'un de l'autre, R ou un groupe OH ;
- au moins deux des radicaux R⁸ présents étant OH ; et
- tous les radicaux R² présents étant, indépendamment l'un de l'autre, H ou CH₃ ; et
- si on le désire, après la réaction, en faisant réagir encore les groupes OH encore présents avec un alcool linéaire ou ramifié monovalent ayant 1 à 16 atomes de carbone.

2. Composition selon la revendication 1, **caractérisé par le fait que** le polyorganosiloxane à teneur en hydroxyle comprend encore, à l'intérieur de la chaîne siloxane, une ou plusieurs unités de la formule (VI) :
-Si(R⁹)(Z)-O- (VI)
dans laquelle tous les radicaux Z présents sont, indépendamment l'un de l'autre, un radical de la formule (VII) ou de la formule (VIII) : 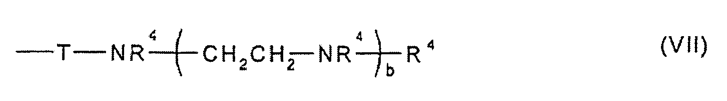 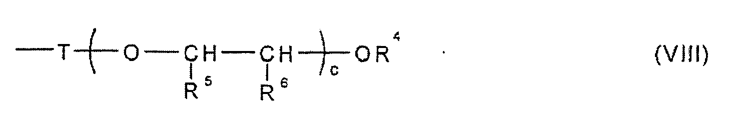 formules dans lesquelles :
- T est un radical alkylène linéaire ou ramifié ayant 1 à 4 atomes de carbone ;
- b est 0, 1, 2 ;
- c est un nombre de 1 à 20 ;
- tous les radicaux R⁴ sont, indépendamment l'un de l'autre, H ou R ; et
- dans chaque unité de la formule (VIII), l'un des radicaux R⁵ et R⁶ représente H et l'autre représente H ou CH₃.

3. Composition selon l'une des revendications 1 ou 2, **caractérisée par le fait qu'**en plus des silanes de la formule (III) et de la formule (IV) pour la réaction avec un polyorganosiloxane à teneur en hydroxyle, un ou plusieurs silanes sont utilisés qui sont choisis parmi les silanes de la formule (IX), de la formule (X) et de la formule (XI) : 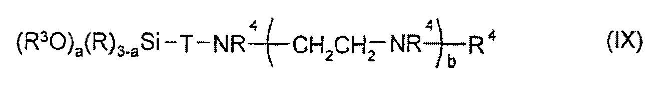 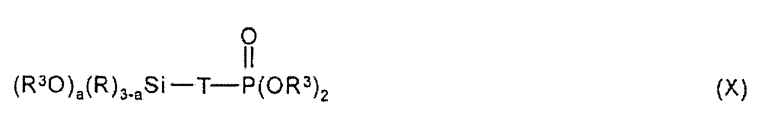 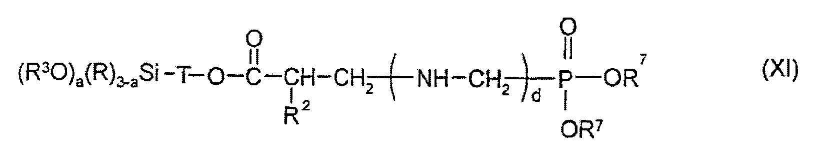 formules dans lesquelles les radicaux R⁷ présents, sont indépendamment l'un de l'autre, -CH₃ ou -CH₂-CH₃ et d est 0 ou 1 ;
R, R², R³, R⁴, T, a et b étant tels que définis dans l'une des revendications 1 ou 2.

4. Composition selon l'une ou plusieurs des revendications 1 à 3, **caractérisée par le fait que** la réaction est effectuée en présence d'un catalyseur.

5. Composition selon la revendication 4, **caractérisée par le fait qu'**un catalyseur basique est utilisé.

6. Composition selon l'une des revendications 4 ou 5, **caractérisée par le fait que** le catalyseur est un alcoolate métallique, de préférence de la formule (XI) :
M(OR³) (XI)
dans laquelle M est Na ou K ; et
R³ est tel que défini dans la revendication 1.

7. Composition selon l'une ou plusieurs des revendications 1 à 6, **caractérisée par le fait que**, par mole de groupes OH du polyorganosiloxane à teneur en hydroxyle, 0,01 à 0,6 mole de silanes de la formule (III) et de la formule (IV) est utilisée.

8. Composition selon l'une ou plusieurs des revendications 1 à 7, **caractérisée par le fait que**, pour la réaction, un mélange de silanes de la formule (III) et de la formule (IV) est utilisé qui contient 2 à 20, de préférence 5 à 14, moles de silane de la formule (III) par mole de silane de la formule (IV).

9. Utilisation d'une composition selon l'une ou plusieurs des revendications 1 à 8 pour un traitement de matières fibreuses.

10. Utilisation selon la revendication 9, **caractérisée par le fait que** le traitement de matières fibreuses est effectué sous la forme d'un procédé d'application à la machine à enduction à rideau.

11. Utilisation selon la revendication 10, **caractérisée par le fait qu'**après l'application à la machine à enduction à rideau, un durcissement au moyen d'un rayonnement UV ou de faisceaux d'électrons est effectué.

12. Utilisation selon l'une ou plusieurs des revendications 9 à 11, **caractérisée par le fait que** les matières fibreuses sont des textiles de type feuilles sous la forme de tissés, tricots ou non-tissés.

13. Utilisation selon l'une ou plusieurs des revendications 9 à 12, **caractérisée par le fait que** les matières fibreuses sont composées de polyamide.
